Europäisches Patentamt

European Patent Office

Office européen des brevets

(19)

(11) Veröffentlichungsnummer: **0 071 184**
**B1**

(12) **EUROPÄISCHE PATENTSCHRIFT**

(45) Veröffentlichungstag der Patentschrift:
**27.12.84**

(51) Int. Cl.³: **F 16 L 33/08**

(21) Anmeldenummer: **82106606.5**

(22) Anmeldetag: **22.07.82**

(54) **Schlauchschelle.**

(30) Priorität: **30.07.81 DE 3130007**

(43) Veröffentlichungstag der Anmeldung:
**09.02.83 Patentblatt 83/6**

(45) Bekanntmachung des Hinweises auf die Patenterteilung:
**27.12.84 Patentblatt 84/52**

(84) Benannte Vertragsstaaten:
**AT CH DE FR GB IT LI SE**

(56) Entgegenhaltungen:
**CH - A - 408 567**
**DE - B - 1 261 717**
**DE - U - 1 983 858**
**DE - U - 6 802 622**
**DE - U - 7 217 340**
**FR - A - 1 484 749**

(73) Patentinhaber: **Allert, Kurt, Panoramaweg 3,
D-7238 Oberndorf/Neckar (DE)**

(72) Erfinder: **Allert, Kurt, Panoramaweg 3,
D-7238 Oberndorf/Neckar (DE)**

(74) Vertreter: **König, Oskar, Dr.-Ing. Dipl.-Phys.,
Klüpfelstrasse 6 Postfach 51, D-7000 Stuttgart 1 (DE)**

**Beschreibung**

Die Erfindung betrifft eine Schlauchschelle gemäss dem Oberbegriff des Anspruches 1. Eine solche Schlauchschelle ist beispielsweise aus der DE-U Nr. 7217340 bekannt.

Bei derartigen Schlauchschellen können beim Spannen des Spannbandes durch Drehen der Schnecke sehr grosse Kräfte auf das Gehäuse des Spannschlosses ausgeübt werden, so dass die Gefahr von Überbeanspruchungen entsteht, die beispielsweise zu die Betriebssicherheit gefährdender Verbiegung des Gehäuses des Spannschlosses führen können.

Es ist deshalb Aufgabe der Erfindung, auf baulich einfache, möglichst keine Mehrkosten verursachende Weise zu erreichen, dass der Benutzer der Schlauchschelle ohne Anwendung von Drehmomentschlüsseln erkennen kann, wenn die Schlauchschelle mit vorgesehener, maximal zulässiger Spannkraft gespannt ist.

Diese Aufgabe wird, ausgehend von einer Schlauchschelle gemäss dem Obergebriff des Anspruches 1, durch die im Kennzeichen des Anspruches 1 angegebenen Merkmale gelöst.

Dank der schmalen Durchbrüche in den Gehäuselängsseitenwänden kann man durch deren Deformation, die vorzugsweise eine plastische Deformation, ggf. jedoch auch eine elastische Deformation sein kann, erkennen, wenn die Spannkraft ausreichend gross ist und nicht mehr weiter erhöht werden soll, um Überlastungen des Spannschlosses oder des Spannbandes zu vermeiden. Diejenige Spannkraft, die zur visuell erkennbaren Deformation der schmalen Durchbrüche führt, kann man durch die Dicke der Gehäuselängsseitenwände, die Anordnung der schmalen Durchbrüche und ihre Höhe und auch durch die Materialwahl für die Gehäuselängsseiten stets so treffen, dass bei Erreichen der gewünschten maximalen Spannkraft, die nach Möglichkeit nicht überschritten werden soll, die schmalen Durchbrüche visuell sichtbar deformiert werden und man deshalb das Spannband nicht mehr stärker spannen soll.

Die schmalen Durchbrüche können in den Gehäuselängsseiten ohne Mehrkosten angeordnet werden. Wenn, wie bevorzugt vorgesehen, das Gehäuse des Spannschlosses aus Metallblech durch Stanzen und Biegen hergestellt wird, kann man diese schmalen Durchbrüche mit ausstanzen. Wenn das Gehäuse aus Metall oder Kunststoff gespritzt ist, kann man diese schmalen Durchbrüche mit einspritzen.

Bei Spannschlössern besonders einfacher Bauart kann die Schnecke an mit den Gehäuselängsseitenwänden einstückigen Abwinklungen der Gehäuselängsseitenwände und/oder der Gehäusedecke angeordnet sein, wobei lediglich darauf zu achten ist, dass die Schnecke auf die Längsseitenwände zur Deformation der Durchbrüche ausreichend grosse Druckkräfte übertragen kann. Beispielsweise kann ein den Schneckenkopf mit dem Schneckengewinde verbindender Hals der Schnecke in einem die beiden Längsseitenwände an ihrem vorderen Ende verbindenden Verbindungssteg angeordnet sein, wobei die der optischen Anzeige der maximal vorgesehenen Spannkraft dienenden Durchbrüche als schmale, hochgestellte Fenster ausgebildet sein können, die nahe diesem Verbindungssteg sich vorzugsweise zumindest über dessen Höhe erstreckend angeordnet sind.

Bei einer bevorzugten Weiterbildung ist vorgesehen, dass das Spannschloss einen die Schnecke drehbar lagernden Deckel aufweist, der am Spannschlossgehäuse längsverschiebbar gelagert ist und seitlich abstehende Lappen aufweist, die in Einbuchtungen der Gehäuselängsseiten eingreifen, dass die der längsverschiebbaren Lagerung benachbarten rückwärtigen Hochseiten dieser Einbuchtungen Widerlager für die beiden Lappen des Deckels bilden, und dass in den Gehäuselängsseitenwänden in geringem Abstand hinter den rückwärtigen Hochseiten der Einbuchtungen die Durchbrüche angeordnet sind. Hierdurch lässt sich die zur Deformation der Durchbrüche führende Spannkraft in engeren Grenzen halten. Die Längsverschiebbarkeit des Deckels am Gehäuse kann dabei auf unterschiedliche Weise erreicht werden. Beispielsweise kann der Deckel an jeder seiner Längsseiten einen oder mehrere, seitlich abstehende Zapfen aufweisen, die in Langlöcher in den Gehäuseseitenwänden zur längsverschiebbaren Lagerung des Deckels eingreifen. Auch ist es möglich, den Deckel als aufklappbaren Deckel auszubilden, so dass das Spannschloss ein Schnellspannschloss bildet.

In der Zeichnung ist ein Ausführungsbeispiel der Erfindung dargestellt. Es zeigen:

Fig. 1 eine ausschnittsweise Seitenansicht einer Schlauchschelle gemäss einem Ausführungsbeispiel der Erfindung bei geöffnetem Klappdeckel,

Fig. 2 eine Seitenansicht der Schlauchschelle entsprechend Fig. 1, jedoch bei geschlossenem und arretiertem Klappdeckel,

Fig. 3 eine Draufsicht auf die Schlauchschelle nach Fig. 2, wobei das Spannband ebenfalls nur teilweise dargestellt ist, und

Fig. 4 eine Vorderansicht des Schnellspannschlosses der Schlauchschelle nach den Fig. 1 bis 3.

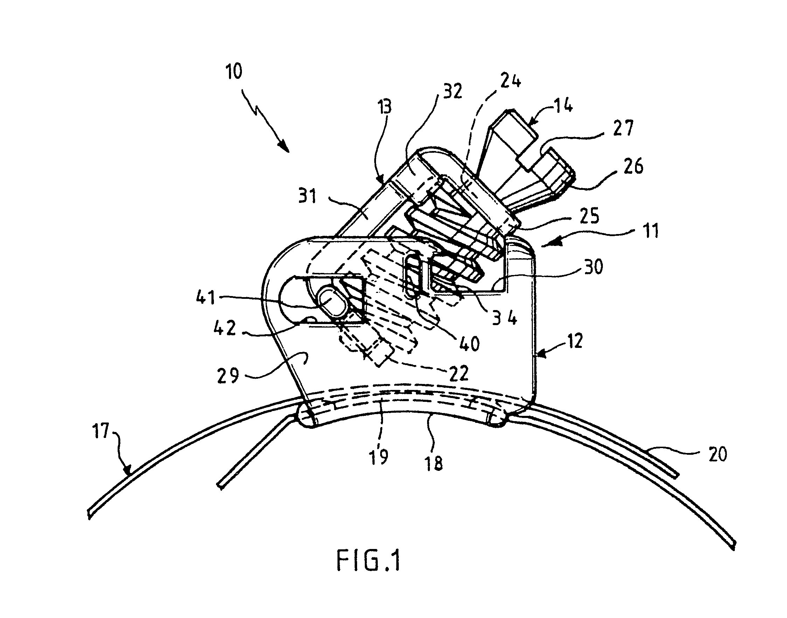

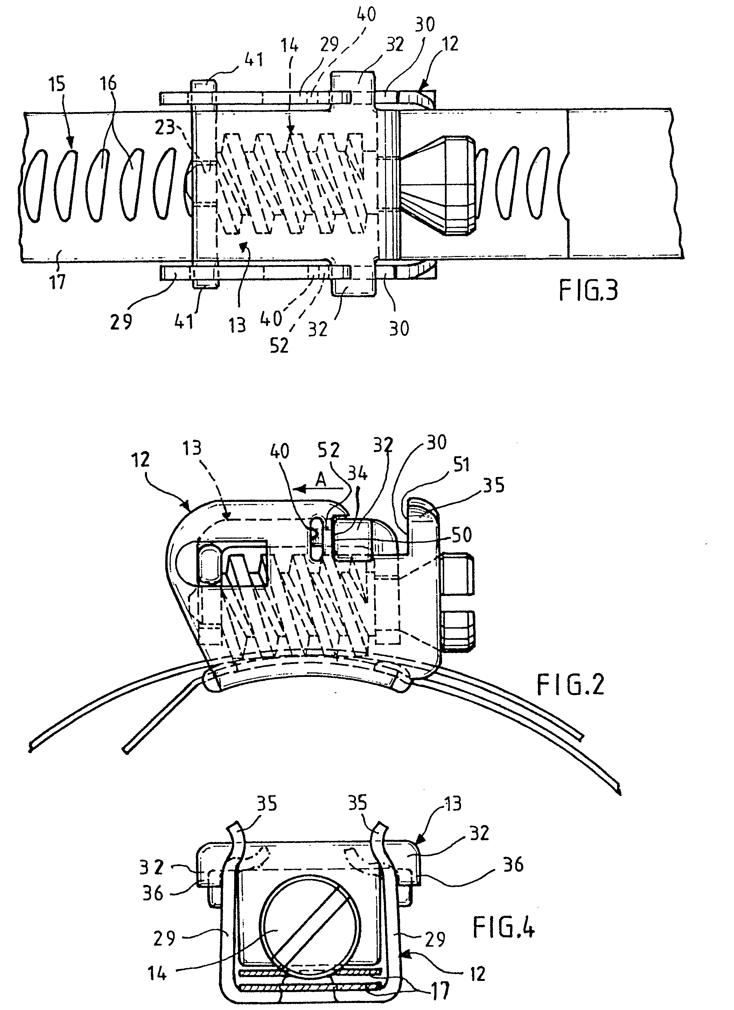

Die in der Zeichnung dargestellte Schlauchschelle 10 weist einen Schnellverschluss in Form eines Schnellspannschlosses 11 auf, das aus einem Gehäuse 12 und einem Klappdeckel 13 mit im Klappdeckel 13 drehbar gelagerter Schnecke 14 besteht. Das eine Schrägverzahnung 15 in Form einer Reihe von schräggestellten, kreissegmentförmigen Ausstanzungen 16 aufweisende Spannband 17 ist mit seinem einen Ende 19 am Gehäuseboden 18 des in Vorderansicht U-förmigen Gehäuses 12 befestigt, indem vorder- und rückseitig des Gehäusebodens 18 angeordnete Lappen durch Ausstanzungen im Spannband hindurchragen und auf das Spannband 17 umgebogen sind, so dass dieses Spannbandende 19 am Gehäuseboden 18 unverrückbar gehalten ist. Dieses Spannband 17 führt dann in einem Kreis zum Gehäuse 12 zurück und das freie Ende 20 dieses Spannbandes 17 ist durch das Gehäuse 12 oberhalb des befestigten Spannbandendbereiches 19 hindurchgeführt und man kann dieses freie Spannbandende 20 bei hochgeklapptem Klappdeckel 13 (Fig. 1) beliebig von Hand durch das Gehäuse 12 hindurchziehen. Wenn dieses Spannband 17 einen auf einem Stutzen od. dgl. zu befestigenden Schlauch od. dgl. umfasst, kann man so bei hochgeklapptem Klappdeckel 13 das Spannband 17 bereits von Hand so weit wie möglich anziehen und dann klappt man den Klappdeckel 13 aus der in Fig. 1 dargestellten Offenstellung in die in Fig. 2 dargestellte Geschlossenstellung nach unten, wodurch das Schneckengewinde der Schnecke 14 in Eingriff mit der Verzahnung 15 des Spannbandes 17 kommt und nunmehr das Spannband 17 nicht mehr von Hand, sondern nur noch durch Drehen der Schnecke 14 bewegt werden kann.

Die Schnecke 14 ist im Klappdeckel 13 dadurch drehbar gelagert, indem der Klappdeckel 13 in Seitenansicht U-förmig ausgebildet ist, und die Schneckenspitze durchdringt eine Lagerbohrung 23 des rückwärtigen Schenkels 22 dieses Klappdeckels 13 und ferner ist der gegenüber dem Gewinde der Schnecke 14 und deren Kopf 26 im Durchmesser verkleinerte Hals 24 der Schnecke 14 in einen untenseitig offenen Lagerschlitz des vorderen Schenkels 25 des Klappdeckels 13 eingesetzt und die diesen Schlitz begrenzenden beiden Stege sind unterhalb des Halses 24 aufeinander zu gebogen, so dass der Hals 24 in diesem Längsschlitz des vorderen Schenkels 25 drehbar gelagert ist und aus ihm nicht mehr herausgelangen kann. Der Kopf 26 der Schnecke 14 weist einen Schlitz 27 für einen Schraubenzieher auf. Auch andere Kopfgestaltungen sind möglich, vorzugsweise mit Innensechskant.

Obenseitig nahe dem bezogen auf Fig. 1 rechtsseitigen Gehäuselängsende weisen die beiden Längsseitenwände 29 des Gehäuses 12 je eine nach oben offene Einbuchtung 30 für von beiden Längsseiten des oberen Mittelsteges 31 des Klappdeckels 13 seitlich abstehende Lappen 32 auf, die bei geschlossenem Klappdeckel 13 in die beiden Einbuchtungen 30 zu liegen kommen, wobei diese beiden Lappen 32 ausserhalb der beiden Längsseitenwände 29 des Gehäuses 12 diese beiden Längsseitenwände 29 in der Geschlossenstellung des Klappdeckels 13 übergreifend nach unten abgewinkelt sind, um so durch die Abwinklungen 36 eine Sicherung gegen Aufspreizen der Längsseitenwände 29 zu bilden und/oder um, falls das Gehäuse 12 durch Auseinanderbiegen der beiden Längsseitenwände 29 beschädigt sein sollte, Schliessen des Klappdeckels 13 zu verhindern, um so die seine Brauchbarkeit in Frage stellende Beschädigung des Gehäuses 12 dem Benutzer kenntlich zu machen.

Der Klappdeckel 13 weist an seinem rückwärtigen Schenkel 22 zwei von diesem Schenkel 22 seitlich abstehende Vorsprünge auf, die Langerzapfen 41 bilden, die in Langlöcher 42 der beiden Längsseitenwände 29 zur Schwenklagerung und zur längsverschiebbaren Lagerung des Klappdeckels 13 eingreifen. Diese beiden Langlöcher 42 erstrecken sich in Längsrichtung des Gehäuses 12, d.h. in der Bewegungsrichtung des Spannbandes 17.

Die beiden Einbuchtungen 30 weisen an ihren dem Schwenklager des Klappdeckels 13 benachbarten Enden je eine rechteckförmige Hinterschneidung 34 für die beiden Lappen 32 auf, in die die beiden Lappen 32 zur Arretierung des Klappdeckels 13, d.h. zur Sicherung gegen unbeabsichtigtes Aufklappen des Klappdeckels 13, eingreifen können. Wenn man den Klappdeckel 13 schliesst, gelangen seine beiden Lappen 32 in die Einbuchtungen 30, und dann verschiebt man ihn in Richtung des Pfeiles A, so dass diese Lappen 32 in die Hinterschneidungen 34 der Einbuchtungen 30 eingreifen, und hierdurch ist dann der Klappdeckel 13 gegen Aufklappen, d.h. Hochschwenken, verriegelt. Um ihn zu entriegeln, muss man ihn von Hand entgegen der Pfeilrichtung A längsverschieben und kann ihn dann, wenn die beiden Lappen 32 aus den Hinterschneidungen 34 herausgelangt sind, wieder aufklappen.

Wenn man diese Schlauchschelle 10 durch Drehen der Schnecke 14 auf dem sie durchdringenden Schlauch spannt, dann wird durch den mit dem Schneckengewinde kämmenden Bereich des Spannbandes 17 auf die Schnecke 14 eine Kraft in Richtung des Pfeiles A ausgeübt, die den Klappdeckel 13 entsprechend in Richtung des Pfeiles A zu verschieben versucht, und hierdurch werden die beiden Lappen 32 mit mit der Spannkraft zunehmender Kraft an die bezogen auf Fig. 2 vertikalen rückwärtigen Hochseiten 50 der Hinterschneidungen 34 der Einbuchtungen 30 gedrückt, welche Hochseiten 50 so Widerlager für die beiden Lappen 32 des Klappdeckels 13 bilden. Auch in diesem gespannten Zustand ist ein versehentliches Aufklappen des Klappdeckels 13 durch die beiden Hinterschneidungen 34 sicher verhindert. Um noch einen zusätzlichen Schutz gegen gewaltsames Hochklappen des Klappdeckels 13 zu schaffen, sind ferner die beiden Längsseitenwände 29 an den vorderen vertikalen Hochseiten 51 der beiden Einbuchtungen 30 nach oben zur Bildung von zwei Krallen 35 verlängert, welche Krallen 35 beispielsweise mittels eines Hammers oder einer Zange aus den in Fig. 4 dargestellten Grundstellungen aus nach innen in die strichpunktierten Stellungen umgebogen werden können, in welchen sie dem vorderen Schenkel 25 des Klappdeckels 13 gegenüberliegen und verhindern, dass der Klappdeckel 13 entgegen der Richtung des Pfeiles A in eine Stellung verschoben werden kann, in der die Lappen 32 aus den Hinterschneidungen 34 der Einbuchtungen 30 freikämmen. Damit lässt sich die Betriebsstellung der Schlauchschelle 10 zusätzlich gegen Öffnen des Klappdeckels 13 verriegeln, so dass ein Entriegeln nur unter Anwendung von Werkzeugen unter Hochbiegen der Krallen 35 möglich ist. Die Krallen 35 können ggf. auch auf den Klappdeckel 13 umgebogen werden, besser ist es jedoch, wenn sie das Längsverschieben des Klappdeckels 13 sperren.

In den Gehäuselängsseitenwänden 29 sind erfindungsgemäss in geringem Abstand hinter den beiden Hinterschneidungen 34 aufrechte, schmale Langlöcher mit eingestanzt, die schmale Durchbrüche 40 in Form von Fenstern bilden, die nur durch dünne Stege 52 von den Hochseiten 50 der Hinterschneidungen 34 getrennt sind, und so beim Spannen der Schlauchschelle 10 durch starken Druck der beiden Lappen 32 auf die rückwärtigen Hochseiten 50 der Hinterschneidungen 34 durch Verbiegen der Stege 52 unter Schmalerwerden plastisch deformiert werden können und hierdurch anzeigen, dass die vorgesehene maximale Spannkraft der Schlauchschelle erreicht ist und die Spannkraft nicht mehr weiter erhöht werden soll. Beispielsweise können die Gehäuselängsseitenwände 29 so ausgebildet sein, dass die Durchbrüche 40 bei Überschreiten einer Spannkraft von ungefähr 500 N plastisch deformiert werden. Je nach Material und Dicke der Gehäuselängsseitenwände 29 und der Höhe der Hochseiten 50 und der Abstände der Durchbrüche 40 von den Hinterschneidungen 34 kann die plastische Deformation der Durchbrüche 40 auch bereits bei kleineren Spannkräften oder erst bei höheren Spannkräften einsetzen, so dass man es in der Hand hat, für jede Schlauchschelle eine gewünschte maximale Spannkraft durch plastische Deformation der Durchbrüche 40 anzuzeigen. Hierdurch lassen sich Überlastungen der Schlauchschelle auch ohne Anwendung von Drehmomentschlüsseln vermeiden. Wenn das Gehäuse 12 aus elastisch verformbarem Material besteht, können die Durchbrüche 40 zur optischen Anzeige der vorgesehenen maximalen Spannkraft entsprechend elastisch deformiert werden, so dass dann die Deformation reversibel ist.

## Patentansprüche

1. Schlauchschelle (10) mit einem Spannband (17) und einem Spannschloss (11), an dessen Gehäuseboden (18) das eine Ende (19) des Spannbandes (19) gehalten ist, an welchem Spannschloss (11) eine mit einer Verzahnung (15) des Spannbandes (17) zu dessen Verstellung zusammenwirkende Schnecke (14) drehbar gelagert ist, dadurch gekennzeichnet, dass in den Längsseitenwänden (29) des Gehäuses (12) des Spannschlosses (11) schmale Durchbrüche (40) angeordnet sind, die beim Spannen des Spannbandes (17) durch die von der Schnecke (14) auf das Gehäuse (12) des Spannschlosses (11) übertragene grosse Spannkraft zur optischen Anzeige, dass die Spannkraft nicht mehr weiter vergrössert werden soll, deformierbar sind.

2. Schlauchschelle nach Anspruch 1, dadurch gekennzeichnet, dass das Spannschloss (11) einen die Schnecke (14) drehbar lagernden Deckel (13) aufweist, der am Spannschlossgehäuse (12) längsverschiebbar gelagert ist (bei 42) und seitlich abstehende Lappen (32) aufweist, die in Einbuchtungen (30) der Gehäuselängsseiten (29) eingreifen, dass die der Längsverschiebbaren Lagerung (42) benachbarten rückwärtigen Hochseiten (50) dieser Einbuchtungen Widerlager für die beiden Lappen (32) des Deckels (13) bilden, und dass in den Gehäuselängsseitenwänden (29) in geringem Abstand hinter den rückwärtigen Hochseiten (50) der Einbuchtungen (30) die schmalen Durchbrüche (40) angeordnet sind.

3. Schlauchschelle nach Anspruch 2, dadurch gekennzeichnet, dass der Deckel (13) seitliche Lagerzapfen (41) aufweist, die zu seiner längsverschiebbaren Lagerung in Langlöcher (42) der Gehäuselängsseitenwände (29) eingreifen.

4. Schlauchschelle nach einem der Ansprüche 2 oder 3, dadurch gekennzeichnet, dass der Deckel (13) ein aufklappbarer Deckel ist.

5. Schlauchschelle nach einem der vorhergehenden Ansprüche, dadurch gekennzeichnet, dass die schmalen Durchbrüche (40) sich quer zur Gehäuselängsrichtung erstrecken.

## Claims

1. A hose clip (10) with a tension band (17) and a tightener (11) on whose housing floor (18) one end (19) of the tension band (17) is held, at which tightener (11) a worm (14), which cooperates with toothing (15) of the tension band (17) for the adjustment thereof, is mounted rotatably, characterized in that in the longitudinal lateral walls (29) of the housing (12) of the tightener (11) narrow openings (40) are disposed, which, when tensioning the tension band (17) by the great tensioning force transmitted by the worm (14) to the housing (12) of the tightener (11), can be deformed so as to give a visual indication that the tensioning force is not to be further increased.

2. A hose clip according to Claim 1, characterized in that the tightener (11) has a cover (13) which supports the worm (14) rotatably, is mounted (at 42) on the tightener housing (12) so as to be longitudinally displaceable, and has laterally projecting lugs (32) which engage in recesses (30) of the longitudinal sides (29) of the housing, in that the rear upright sides (50), adjacent to the longitudinally displaceable bearing (42), of these recesses form abutments for the two lugs (32) of the cover (13), and in that in the longitudinal lateral walls (29) of the housing the narrow openings (40) are disposed at a short distance behind the rear upright sides (50) of the recesses (30).

3. A hose clip according to Claim 2, characterized in that the cover (13) has lateral bearing journals (41) which engage in longitudinal holes (42) of the longitudinal lateral walls (29) of the housing, in order to support the cover in a longitudinally displaceable manner.

4. A hose clip according to one of Claims 2 or 3, characterized in that the cover (13) is a hinged cover.

5. A hose clip according to one of the preceding claims, characterized in that the narrow openings (40) extend transversely to the longitudinal extent of the housing.

## Revendications

1. Collier de serrage pour tuyaux (10) avec une bande de serrage (17) et un manchon de serrage (11), au fond (18) du boîtier duquel est maintenue l'une des extrémités (19) de la bande de serrage (17), manchon de serrage (11) sur lequel est logée de façon rotative une vis sans fin (14) à action conjuguée avec une denture (15) de la bande de serrage (17), en vue du réglage de celle-ci, caractérisé par le fait que des ouvertures étroites (40) sont disposées dans les parois des grands côtés longitudinaux (29) du boîtier (12) du manchon de serrage (11), ouvertures étroites (40) qui sont déformées, lors du serrage de la bande de serrage (17), par l'effort de serrage intense reporté par la vis sans fin (14) sur le boîtier (12) du manchon de serrage (11) en vue d'indiquer visuellement que l'effort de serrage ne doit plus être augmenté.

2. Collier de serrage selon la revendicaiton 1, caractérisé par le fait que le manchon de serrage (11) présente un couvercle (13) logeant de façon rotative la vis sans fin (14), couvercle (13) qui est logé sur le manchon de serrage (12) de façon à pouvoir être déplacé longitudinalement (en 42) et qui présente des pattes (32), saillant latéralement, qui engrènent dans des échancrures (30) des parois des grands côtés longitudinaux (29) du boîtier, que les côtés verticaux (50) à proximité du logement de déplacement longitudinal (42) de ces échancrures forment des butées pour les pattes (32) du couvercle (13), et que les ouvertures étroites (40) sont disposées dans les parois des grands côtés longitudinaux (29) du boîtier à une faible distance derrière les côtés verticaux arrière (50) des échancrures (30).

3. Collier de serrage selon la revendication 2, caractérisé par le fait que le couvercle (13) présente des tourillons latéraux (41) qui engrènent, pour son logement de déplacement longitudinal, dans des trous oblongs (42) des parois des grands côtés longitudinaux (29) du boîtier.

4. Collier de serrage selon l'un des revendications 2 ou 3, caractérisé par le fait que le couvercle (13) est un couvercle relevable.

5. Collier de serrage selon l'une des revendications précédentes, caractérisé par le fait que les ouvertures étroites (40) s'étendent transversalement par rapport au sens longitudinal du boîtier.

FIG.1

0 071 184

FIG.3

FIG.2

FIG.4